# FASCICULE DE BREVET EUROPEEN

(11) **EP 2 656 151 B1**
(45) Date de publication et mention de la délivrance du brevet: **07.01.2015**
(21) Numéro de dépôt: 11785682.3
(22) Date de dépôt: 22.11.2011
(51) Int. Cl.: G04B 15/14, G04B 17/32, G04B 17/34, G04B 13/02, B81C 3/00, G04D 1/00, G04D 3/04

(54) **ASSEMBLAGE D'UNE PIÈCE NE COMPORTANT PAS DE DOMAINE PLASTIQUE**
MONTAGE EINER KOMPONENTE OHNE KUNSTSTOFFBEREICH
ASSEMBLY OF A COMPONENT WHICH DOES NOT HAVE A PLASTIC DOMAIN

(30) Priorité: 22.12.2010 EP 10196591
(43) Date de publication de la demande: 30.10.2013
(73) Titulaire: ETA SA Manufacture Horlogère Suisse, 2540 Grenchen (CH)
(72) Inventeur: CONUS, Thierry, CH-2543 Lengnau (CH); VERARDO, Marco, CH-2336 Les Bois (CH); SAGLINI, Igor, CH-6702 Claro (CH); KOHLER, Frédéric, CH-1752 Villars-sur-Glâne (CH)
(74) Mandataire: Couillard, Yann Luc Raymond
(86) Numéro de dépôt international: PCT/EP2011/070689
(87) Numéro de publication internationale: WO 2012/084383

(56) Documents cités:
- EP-A1- 1 850 193
- EP-A1- 2 075 652
- EP-A1- 2 442 189
- CH-A2- 700 260

## Description

### Domaine de l'invention

L'invention se rapporte à un assemblage d'une pièce dont le matériau ne comporte pas de domaine plastique avec un organe comportant un autre type de matériau.

### Arrière plan de l'invention

Les assemblages actuels comportant une pièce à base de silicium sont généralement solidarisés par collage. Une telle opération nécessite une extrême finesse d'application ce qui la rend coûteuse.

Le document EP 1 850 193 divulgue une première pièce faite à base silicium qui est assemblée sur un axe en métal à l'aide d'une pièce intermédiaire métallique. Toutefois, les variantes de forme proposées dans ce document ne sont pas satisfaisantes et, soit, entraînent le bris de la pièce à base de silicium lors de son assemblage, soit, solidarisent insuffisamment les pièces entre elles.

Le document CH 700 260 divulgue le montage d'un balancier sur un arbre à l'aide d'une pièce intermédiaire.

### Résumé de l'invention

Le but de la présente invention est de pallier tout ou partie les inconvénients cités précédemment en proposant un assemblage sans colle capable de solidariser une pièce dont le matériau ne comporte pas de domaine plastique avec un organe comportant un matériau ductile comme, par exemple, un métal ou un alliage métallique.

Il s'agit un assemblage d'un organe en un premier matériau dans l'ouverture d'une pièce en un deuxième matériau ne comportant pas de domaine plastique à l'aide d'une partie intermédiaire en un troisième matériau montée entre ledit organe et ladite pièce.

La partie intermédiaire comporte une lumière destinée à recevoir ledit organe, en ce que la pièce comporte des ajourages formant des moyens de déformation élastique distribués autour de son ouverture et en ce que la partie intermédiaire, déformée élastiquement et plastiquement, serre radialement ledit organe et contraint les moyens de déformation élastique de la pièce afin de solidariser l'assemblage de manière non destructive pour ladite pièce.

Cette configuration permet avantageusement de solidariser l'ensemble pièce - partie intermédiaire - organe sans collage avec un organe habituel à la précision maîtrisée tout en garantissant que la pièce ne subisse pas d'efforts destructifs même si elle est formée, par exemple, à partir de silicium.

Conformément à d'autres caractéristiques avantageuses :
- la paroi externe de la partie intermédiaire est sensiblement de forme correspondante à l'ouverture de la pièce afin d'exercer une contrainte radiale sensiblement uniforme sur la paroi de la pièce entourant ladite ouverture ;
- l'ouverture de la pièce est circulaire ;
- l'ouverture de la pièce est asymétrique afin d'éviter les déplacements relatifs entre les éléments dudit assemblage ;
- les ajourages sont formés à distance et autour de l'ouverture par deux séries de trous en forme de losange distribuées en quinconce afin de former des poutres réparties en V sécants ;
- les ajourages comportent, entre les deux premières séries et l'ouverture, une troisième série qui est formée de trous en forme de triangle et distribuée en quinconce avec l'une des deux premières séries afin de former des poutres réparties en X sécants ;
- la pièce comporte des fentes permettant de faire communiquer la troisième série de trous avec l'ouverture ;
- les ajourages sont formés à distance et autour de l'ouverture par une première série de trous oblongues distribuée en quinconce avec une deuxième série de trous de forme triangulaire, la deuxième série étant la plus proche de l'ouverture, chaque trou de forme triangulaire communiquant avec l'ouverture par une entaille afin de former des poutres mobiles radialement selon l'épaisseur des trous oblongues ;
- les ajourages comportent une troisième série de trous en forme de triangle, chaque trou de la troisième série étant distribué entre deux trous de forme triangulaire de la deuxième série et communiquant avec l'ouverture par une fente afin de former des poutres à deux bras indépendants mobiles radialement selon l'épaisseur des trous oblongues et tangentiellement selon l'épaisseur des fentes ;
- les séries de trous s'étendent sur une largeur comprise entre 100 µm et 500 µm à partir du bord de l'ouverture ;
- l'ouverture comporte une section comprise entre 0,5 et 2 mm.

L'invention se rapporte à un procédé d'assemblage d'un organe en un premier matériau dans une pièce en un deuxième matériau ne comportant pas de domaine plastique comportant les étapes suivantes :
a) former la pièce avec une ouverture et des ajourages distribués autour de l'ouverture destinés à former des moyens de déformation élastique ;
b) introduire sans contrainte dans l'ouverture une partie intermédiaire en un troisième matériau comportant une lumière ;
c) introduire sans contrainte dans la lumière ledit organe ;
d) déformer élastiquement et plastiquement la partie intermédiaire par rapprochement de deux outils afin que la partie intermédiaire exerce une contrainte radiale contre l'organe et contre la paroi de la pièce entourant ladite ouverture en sollicitant lesdits moyens de déformation élastique de la pièce pour solidariser l'assemblage de manière non destructive pour ladite pièce.

Ce procédé permet avantageusement de solidariser radialement l'organe et la pièce sans qu'aucun effort axial ne soit appliqué sur la pièce. En effet, de manière avantageuse selon l'invention, seule une déformation élastique radiale est appliquée sur la pièce. Enfin, un tel procédé permet de solidariser l'ensemble pièce - partie intermédiaire - organe en s'adaptant aux dispersions de fabrication des différents constituants.

Conformément à d'autres caractéristiques avantageuses de l'invention :
- la paroi externe de la partie intermédiaire est sensiblement de forme correspondante à l'ouverture de la pièce afin d'exercer une contrainte radiale sensiblement uniforme sur la paroi de la pièce entourant l'ouverture ;
- l'ouverture de la pièce est circulaire ;
- l'ouverture de la pièce est asymétrique afin d'éviter les déplacements relatifs entre les éléments dudit assemblage ;
- lors de l'étape b), la différence entre la section de l'ouverture et la section externe de la partie intermédiaire est d'environ 10 µm ;
- lors de l'étape c), la différence entre la section de l'organe et la section intérieure de la partie intermédiaire est d'environ 10 µm ;
- lors de l'étape d), la déformation exerce un serrage compris entre 16 et 40 µm ;
- lors des étapes b) à d), la partie intermédiaire est maintenue dans l'ouverture à l'aide d'un des deux outils ;
- le deuxième matériau est formé à base de silicium ;
- le troisième matériau est formé à base de métal ou d'alliage métallique ;
- la pièce peut être, par exemple, un mobile d'horlogerie, une ancre d'horlogerie, un spiral d'horlogerie, un résonateur ou encore un MEMS.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue schématique partielle d'un mouvement horloger comportant trois assemblages selon l'invention ;
- la figure 2 est une vue schématique partielle d'un spiral horloger comportant un quatrième assemblage selon l'invention ;
- les figures 3 à 6 sont des vues de variantes selon un premier mode de réalisation de moyens de déformation élastique selon l'invention ;
- les figures 7 et 8 sont des vues de variantes selon un deuxième mode de réalisation de moyens de déformation élastique selon l'invention ;
- les figures 9 à 11 sont des représentations schématiques d'étapes successives du procédé d'assemblage selon l'invention ;
- la figure 12 est une représentation schématique d'une étape alternative de la figure 11 du procédé d'assemblage selon l'invention.

### Description détaillée des modes de réalisation préférés

Comme expliqué ci-dessus, l'invention se rapporte à un procédé d'assemblage destiné à solidariser un matériau fragile, c'est-à-dire ne comportant pas de domaine plastique comme un matériau à base de silicium, avec un matériau ductile comme un métal ou un alliage métallique.

Cet assemblage a été imaginé pour des applications dans le domaine horloger. Toutefois, d'autres domaines peuvent parfaitement être imaginés comme notamment l'aéronautique, la bijouterie, l'automobile ou les arts de la table.

Dans le domaine horloger, cet assemblage est rendu nécessaire par la part croissante que tiennent les matériaux fragiles comme ceux à base de silicium, de quartz, de corindon ou plus généralement de céramique. On peut, à titre d'exemple, envisager de former le spiral, le balancier, l'ancre, les ponts ou même les mobiles comme les roues d'échappement totalement ou partiellement à base de matériaux fragiles.

Toutefois, le fait de toujours pouvoir utiliser des axes habituels en acier dont la fabrication est maîtrisée, est une contrainte qui est difficile à concilier avec l'utilisation de pièces ne comportant pas de domaine plastique. En effet, lors de tests effectués, le chassage d'un axe en acier est impossible et brise systématiquement les pièces fragiles, c'est-à-dire ne comportant pas de domaine plastique. Par exemple, il est apparu que le cisaillement généré par l'entrée de l'axe métallique dans l'ouverture d'une pièce en silicium brise systématique cette dernière.

C'est pourquoi, l'invention se rapporte à un assemblage entre un organe en un premier matériau, par exemple ductile comme l'acier, dans l'ouverture d'une pièce en un deuxième matériau ne comportant pas de domaine plastique, comme un matériau à base de silicium, par déformation d'une pièce intermédiaire, en un troisième matériau, qui est montée entre ledit organe et ladite pièce.

Selon l'invention, la partie intermédiaire comporte une lumière destinée à recevoir ledit organe. De plus, la partie intermédiaire, déformée élastiquement et plastiquement, serre radialement ledit organe et contraint les moyens de déformation élastique de la pièce afin de solidariser l'assemblage de manière non destructive pour ladite pièce.

De plus, de manière préférée, la paroi externe de la partie intermédiaire est sensiblement de forme correspondante à l'ouverture de la pièce afin d'exercer une contrainte radiale sensiblement uniforme sur la paroi de la pièce entourant ladite ouverture. En effet, lors des recherches effectuées, il est apparu préférable que la partie intermédiaire répartisse de manière uniforme les contraintes radiales induites par sa déformation sur une surface maximisée de la paroi de la pièce entourant l'ouverture.

Par conséquent, si l'ouverture dans la pièce fragile est circulaire, il est préférable que la paroi externe de la partie intermédiaire soit en forme sensiblement de cylindre continu, c'est-à-dire sans fente radiale ou ajourage axial, pour éviter les contraintes localisées sur une faible partie de la paroi de la pièce entourant l'ouverture qui sont propres à briser la matière fragile.

Bien entendu, la forme de l'ouverture dans la pièce fragile peut différer en étant, par exemple, asymétrique afin d'éviter les déplacements relatifs entre les éléments de l'assemblage. Une telle ouverture asymétrique peut ainsi être, par exemple, sensiblement elliptique.

Cette interprétation justifie également la non-utilisation d'une collerette sur la partie supérieure ou inférieure de la partie intermédiaire. En effet, lors de la déformation, une telle collerette transmet une partie de l'effort axial de déformation sur le dessus (ou le dessous) de la pièce fragile. Dès lors, le cisaillement exercé notamment par les coins de la collerette sur le dessus (ou le dessous) de la pièce fragile engendre de la même manière des contraintes localisées propres à briser la pièce fragile.

Par conséquent, la partie intermédiaire avec une forme correspondante à l'ouverture comportant une lumière peut s'interpréter, si la section de l'ouverture est circulaire, comme un anneau plein dont les parois interne et externe sont continues, c'est-à-dire sans rainure ou plus généralement de discontinuité de matière. La forme correspondante de la partie intermédiaire permet donc, par déformation élastique et plastique, de générer uniquement une contrainte radiale sensiblement uniforme sur une surface maximisée de la paroi de la pièce autour de l'ouverture.

Bien entendu, cette forme de paroi correspondante est également applicable à la paroi interne de la partie intermédiaire faisant vis-à-vis avec l'organe. On comprend alors que la forme de la paroi interne pourrait correspondre à celle externe de l'organe afin de générer une contrainte radiale sensiblement uniforme de la paroi interne de la partie intermédiaire sur une surface maximisée de la paroi externe de l'organe.

Enfin, selon l'invention, la pièce comporte des ajourages formant des moyens de déformation élastique qui sont distribués autour et à distance de son ouverture et qui sont destinés à absorber lesdits efforts radiaux pour les restituer une fois la contrainte des outils relâchée afin de, au final, solidariser l'assemblage de manière non destructive pour ladite pièce.

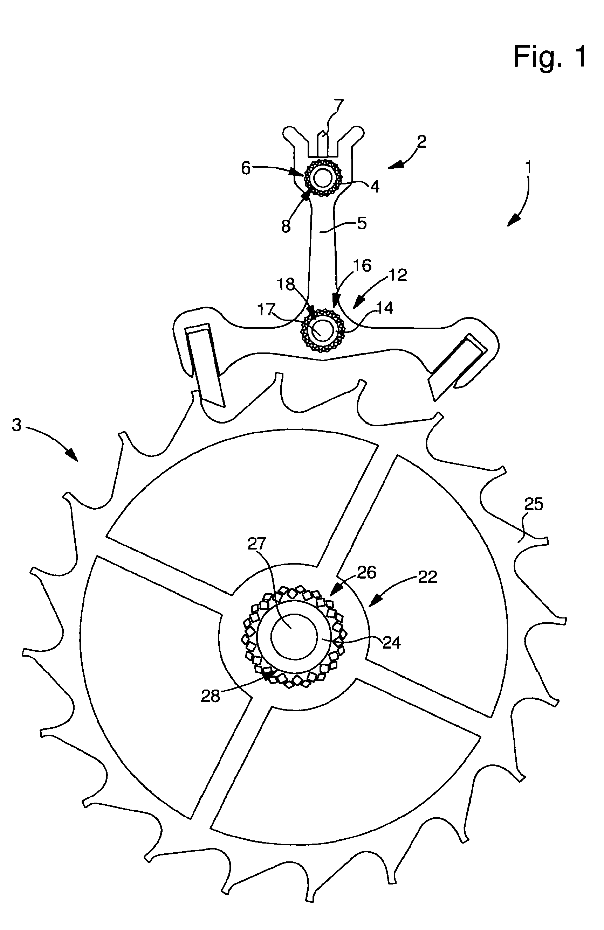

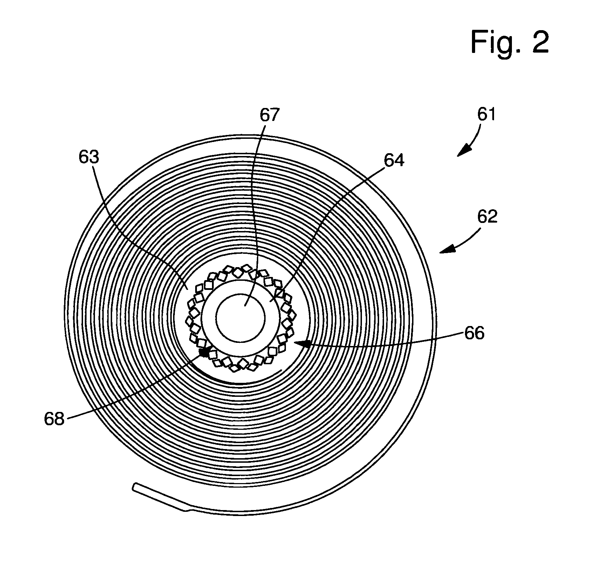

L'assemblage selon l'invention sera mieux compris en relation avec les figures 1 à 8 présentant des exemples d'applications dans le domaine de l'horlogerie. On peut voir à la figure 1, un système d'échappement horloger comportant une ancre 1 et une roue d'échappement 3 et à la figure 2, un spiral 61.

Dans le cas de la figure 1, l'ancre 1, à titre d'exemple, comporte deux assemblages 2, 12 selon l'invention destinés respectivement à solidariser le dard 7 et l'organe, ici un axe de pivotement 17, avec sa baguette 5. Comme visible à la figure 1, chaque assemblage 2, 12 comporte une partie intermédiaire 4, 14 en forme d'anneau plein coopérant entre le dard 7 ou l'organe 17 et la baguette 5 de l'ancre 1. De plus, chaque assemblage 2, 12 comporte des ajourages 6, 16 réalisés dans la baguette 5 autour d'une ouverture 8, 18 et qui sont destinés à former des moyens de déformation élastique. On comprend donc que l'assemblage 2, 12 est suffisamment résistant pour ne pas générer de mouvements relatifs entre ses constituants.

La roue d'échappement 3, et plus généralement le mobile 3, comporte, à titre d'exemple, un assemblage 22 destiné à solidariser l'organe, ici un axe de pivotement 27, avec le corps 25 de la roue 3. Comme visible à la figure 1, l'assemblage 22 comporte une partie intermédiaire 24 en forme d'anneau plein coopérant entre l'organe 27 et le corps 25 de la roue 3. De plus, l'assemblage 22 comporte des ajourages 26 réalisés dans le moyeu autour d'une ouverture 28 de la roue 3 et qui sont destinés à former des moyens de déformation élastique.

On comprend donc immédiatement que l'exemple de l'assemblage 22 peut s'appliquer à tout type de mobile. De plus, l'organe 27 peut comporter en une seule pièce un pignon afin de former le mobile fini.

Comme illustré à la figure 2, il est possible de fixer un spiral 61 sur un organe, ici un axe de balancier 67, à l'aide d'un assemblage 62 selon l'invention. Des ajourages 66 sont formés dans la virole 63 du spiral 61 et une partie intermédiaire 64 est montée dans l'ouverture 68 de la virole 63 de manière similaire aux explications ci-dessus.

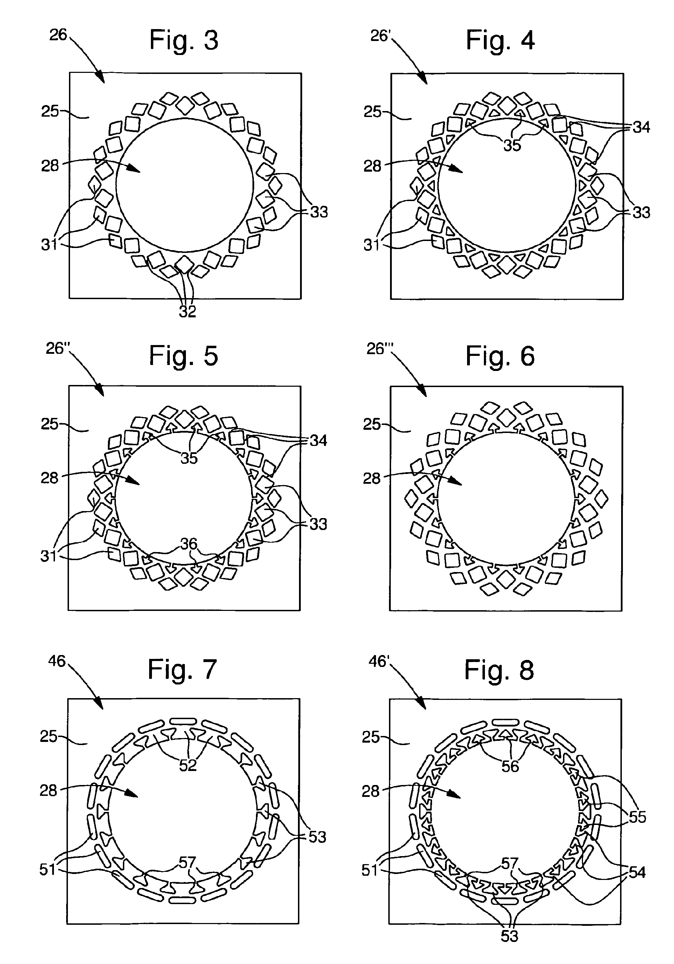

Des exemples d'ajourages sont présentés aux figures 3 à 8. Selon un premier mode de réalisation illustré aux figures 3 à 6, les ajourages sont formés à distance et autour de l'ouverture par deux séries de trous en forme de losange distribuées en quinconce afin de former des poutres réparties en V sécants.

La figure 3 est une représentation des ajourages 6, 16, 26, 66 des figures 1 et 2. Pour plus de simplicité, seules les références de la roue 3 sont reprises à la figure 3. Cette dernière montre des ajourages 26 qui, préférentiellement, traversent totalement l'épaisseur du corps 25 en matériau fragile. Les ajourages 26 sont distribués à distance et autour de l'ouverture 28 formée, de manière préférée, également totalement traversant dans l'épaisseur du corps 25 en matériau fragile.

Comme visible à la figure 3, les ajourages 26 forment une première série de trous 31, les plus éloignés de l'ouverture 28, et une deuxième série de trous 33 qui sont en forme de losange et distribuées en quinconce. On s'aperçoit à la figure 3 que les ajourages 31, 33 forment ainsi des poutres 32 en forme de V qui sont sécantes entre elles.

Dans une première variante du premier mode de réalisation illustrée à la figure 4, les ajourages 26' reprennent les première et deuxième séries de trous 31, 33 avec, en plus, une troisième série qui, formée de trous 35 en forme de triangle, est située entre les deux premières séries et l'ouverture 28, c'est-à-dire la plus proche de l'ouverture 28. Comme visible à la figure 4, la troisième série de trous 35 est distribuée en quinconce avec l'une 33 des deux premières séries afin de former des poutres 34 réparties en X sécants.

Dans une deuxième variante du premier mode de réalisation illustrée à la figure 5, les ajourages 26" reprennent les ajourages 26' de la figure 4 avec, en plus, des fentes 36 permettant de faire communiquer la troisième série de trous 35 avec l'ouverture 28.

Avantageusement selon l'invention, les séries de trous 31, 33 et 35 et les fentes 36 sont utilisés pour former des moyens de déformation élastique aptes à absorber des contraintes radiales, c'est-à-dire des efforts exercés du centre de l'ouverture 28 vers la paroi du corps 25 entourant ladite ouverture circulaire.

Bien entendu, les deux ou trois séries peuvent être plus ou moins rapprochées les unes des autres et/ou de formes différentes et/ou de dimensions différentes en fonction du débattement maximal souhaité et de la contrainte voulue pour déformer les poutres 32, 34.

A titre d'exemple, une alternative de la figure 5 est présentée à la figure 6. On peut voir que les ajourages 26"' sont similaires à ceux 26" de la figure 5, toutefois, les trois séries de trous sont plus espacées les unes des autres. De plus, il est visible que les formes et dimensions aussi bien des trous que des fentes sont différentes. On comprend donc que l'alternative de la figure 6 modifie la rigidité des moyens de déformations élastiques dans la matière fragile.

Préférentiellement, les ajourages 26, 26', 26", 26'" s'étendent sur une largeur comprise entre 100 µm et 500 µm à partir de la paroi du corps 25 entourant l'ouverture 28. De plus, les fentes 36 sont comprises entre 15 µm et 40 µm. Enfin, de manière préférée, la section de l'ouverture 28 est comprise entre 0,5 et 2 mm.

Selon un deuxième mode de réalisation illustré aux figures 7 et 8, les ajourages sont formés à distance et autour de l'ouverture par une première série de trous oblongues distribuée en quinconce avec une deuxième série de trous de forme triangulaire, la deuxième série étant la plus proche de l'ouverture circulaire, chaque trou de forme triangulaire communiquant avec l'ouverture par une entaille afin de former des poutres mobiles radialement selon l'épaisseur des trous oblongues.

Ainsi, la figure 7 montre des ajourages 46 qui, préférentiellement, traversent totalement l'épaisseur du corps 25 en matériau fragile. Les ajourages 46 sont distribués à distance et autour de l'ouverture 28 formée, de manière préférée, également totalement traversant dans l'épaisseur du corps 25 en matériau fragile.

Comme visible à la figure 7, les ajourages 46 forment une première série de trous oblongues 51 et une deuxième série de trous 53 de forme triangulaire. Selon le deuxième mode de réalisation, les deux séries de trous 51, 53 sont distribuées en quinconce.

De plus, chaque trou 53 de forme triangulaire communique avec l'ouverture 28 par une entaille 57. On s'aperçoit à la figure 7 que les ajourages 46 forment ainsi des poutres 52 sensiblement en forme de trapèze qui sont séparées entre elles par les entailles 57. On remarque également que chaque poutre 52 est centrée sur un trou oblongue 51 ce qui rend chaque poutre 52 mobile radialement selon l'épaisseur d'un trou oblongue 51.

Dans une variante du deuxième mode de réalisation illustrée à la figure 8, les ajourages 46' reprennent les ajourages 46 de la figure 7 avec, en plus, une troisième série de trous 55 en forme de triangle. De plus, chaque trou 55 de la troisième série est distribué entre deux trous 53 de forme triangulaire de la deuxième série et communique avec l'ouverture 28 par une fente 56. Les ajourages 46' forment ainsi des poutres 54 à deux bras indépendants symétriques et sensiblement en forme de L qui sont mobiles radialement selon l'épaisseur des trous 51 oblongues et tangentiellement selon l'épaisseur des fentes 56 et des entailles 57.

Bien entendu, comme pour le premier mode de réalisation, les deux ou trois séries peuvent être plus ou moins rapprochées les unes des autres et/ou de formes différentes et/ou de dimensions différentes en fonction du débattement maximal souhaité et de la contrainte voulue pour déformer les poutres 52, 54.

Préférentiellement, les ajourages 46, 46' s'étendent sur une largeur comprise entre 100 µm et 500 µm à partir de la paroi du corps 25 entourant l'ouverture 28. De plus, les fentes 56 et les entailles 57 sont comprises entre 15 µm et 40 µm. Enfin, de manière préférée, la section de l'ouverture 28 est comprise entre 0,5 et 2 mm.

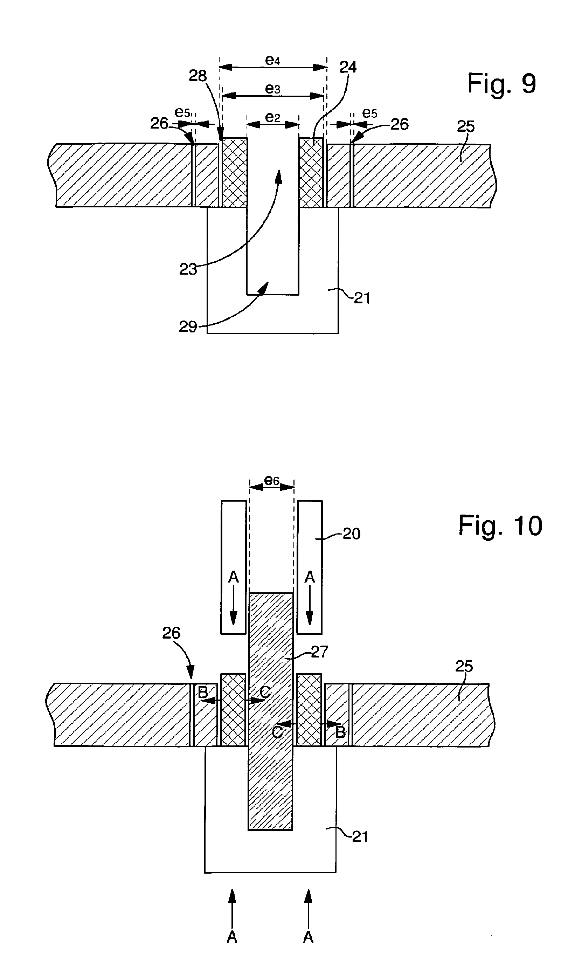

Le procédé d'assemblage va maintenant être expliqué en relation avec les figures schématiques 9 à 11. Pour plus de simplicité, seules les références de la roue 3 sont reprises aux figures 9 à 11. Selon l'invention, une première étape consiste à former la pièce 3 en un matériau n'ayant pas de domaine plastique avec une ouverture 28 et des ajourages 26 distribués autour de l'ouverture 28 destinés à former des moyens de déformation élastique selon, par exemple, les modes de réalisation expliqués ci-dessus. Comme visible à la figure 9, l'ouverture 28 comporte une section e₄ et les ajourages 26 comprennent notamment des trous de section e₅.

Une telle étape peut être réalisée par gravage sous forme sèche ou humide comme, par exemple, un gravage ionique réactif profond (également connu sous l'abréviation anglaise « DRIE »).

De plus, dans une deuxième étape, le procédé consiste à former l'organe, un axe de pivotement 27 dans l'exemple des figures 9 à 11, en un deuxième matériau avec une section principale e₆. Comme expliqué ci-dessus, la deuxième étape peut être réalisée selon les processus habituels de fabrication d'axes. L'organe 27 est préférentiellement métallique et peut, par exemple, être formé en acier.

Le procédé, dans une troisième étape, consiste à former la partie intermédiaire 24 en un troisième matériau avec une lumière 23 de section interne e₂ et de section externe e₃ dont la paroi est de forme sensiblement correspondante à l'ouverture 28. La troisième étape peut ainsi être réalisée à partir d'un usinage habituel ou d'un processus d'électroformage. La partie intermédiaire 24 peut ainsi comporter une épaisseur comprise entre 100 et 300 µm et une largeur l, c'est-à-dire la section externe e₃ moins la section interne e₂ divisées par deux (l = (e₃ - e₂)/2), également comprise entre 100 et 300 µm.

Préférentiellement, le troisième matériau est plus ductile que le deuxième matériau de l'organe 27 afin que ce dernier se déforme moins ou pas du tout lors de l'étape de déformation. La partie intermédiaire 24 est préférentiellement métallique et peut ainsi comporter du nickel et/ou de l'or. Toutefois, tout autre matériau ductile peut avantageusement être ajouté au troisième matériau ou remplacer ce dernier.

Bien entendu, les trois premières étapes n'ont pas de consécutivité à respecter et peuvent même être réalisées en même temps.

Dans une quatrième étape, la partie intermédiaire 24 est introduite sans contact dans l'ouverture 28. Cela signifie comme visible à la figure 9 que la section e₄ de l'ouverture 28 est plus grande ou égale à la section externe e₃ de la partie intermédiaire 24.

De manière préférée, la différence entre la section e₄ de l'ouverture 28 et la section externe e₃ de la partie intermédiaire 24 est d'environ 10 µm, c'est-à-dire un interstice d'environ 5 µm qui sépare le corps 25 de la pièce 3 par rapport à la partie intermédiaire 24.

De plus, préférentiellement selon l'invention, la partie intermédiaire 24 est maintenue dans l'ouverture 28 à l'aide d'un 21 des outils 20, 21 utilisés pour l'étape de déformation. Enfin, de manière préférée, l'outil 21 comporte un évidement 29 destiné à recevoir l'organe 27.

Dans une cinquième étape, l'organe 27 est introduit sans contact dans la lumière 23 de la partie intermédiaire 24. Cela signifie comme visible à la figure 10 que la section e₂ de la lumière 23 est plus grande ou égale à la section externe e₆ de l'organe 27.

De manière préférée, la différence entre la section e₂ de la lumière 23 et la section externe e₆ de l'organe 27 est d'environ 10 µm, c'est-à-dire un interstice d'environ 5 µm qui sépare l'organe 27 de la partie intermédiaire 24.

De plus, préférentiellement selon l'invention, l'organe 27 est maintenu dans la lumière 23 à l'aide dudit évidement 29 de l'outil 21 de section sensiblement équivalente à celle e₆ de l'organe 27.

Enfin, le procédé comporte une sixième étape consistant à déformer élastiquement et plastiquement la partie intermédiaire 24 par rapprochement des outils 20, 21 selon la direction axiale A afin d'exercer une contrainte radiale C, B uniforme respectivement contre l'organe 27 et contre la paroi de la pièce entourant l'ouverture 28 en sollicitant les moyens de déformation élastique de la pièce 3, c'est-à-dire les ajourages 26.

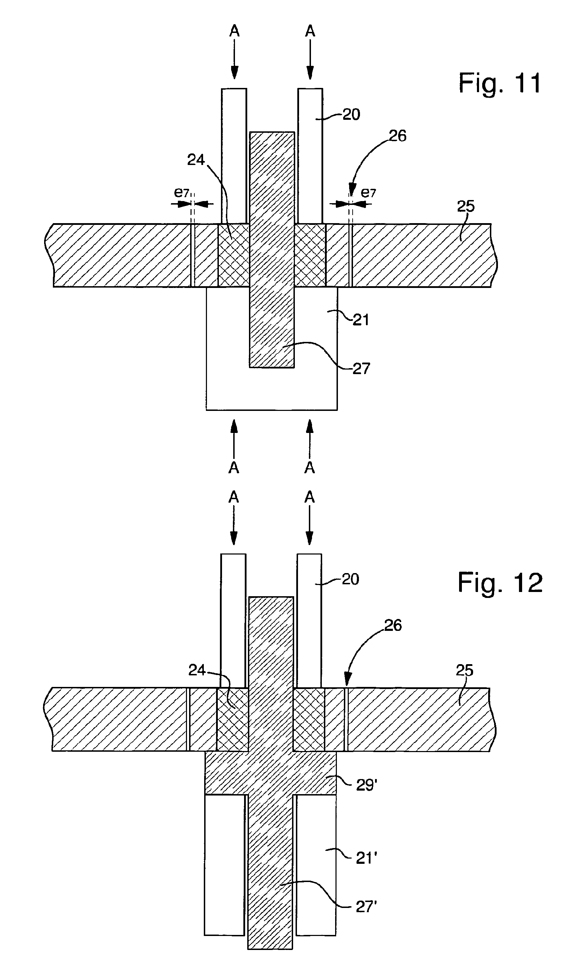

Ainsi, comme visible à la figure 11, le pressage de la partie intermédiaire 24 au niveau de ses parties supérieure et inférieure respectivement par l'outil 20 et 21 selon la direction axiale A va induire une déformation élastique et plastique de la partie intermédiaire 24, laquelle se déforme exclusivement radialement selon les directions B et C, c'est-à-dire vers le corps 25 et vers l'organe 27.

De manière préférée selon l'invention, la déformation est paramétrée afin que le serrage soit supérieur aux interstices entre la partie intermédiaire 24 non déformée et, d'une part, la paroi du corps 25 entourant l'ouverture 28 et, d'autre part, l'organe 27. Préférentiellement, le serrage est compris entre 16 et 40 µm.

Par conséquent, il est voulu que la déformation élastique et plastique de la partie intermédiaire 24 exerce aussi bien la déformation élastique du corps 25 autour de l'ouverture 28 mais également la déformation élastique et/ou plastique de l'organe 27 afin de solidariser ensemble l'organe 27, la partie intermédiaire 24 et le corps 25 de la roue 3 comme visible à la figure 11. Il est à noter que ce mode de réalisation autorise notamment un centrage automatique de l'ensemble organe 27 - partie intermédiaire 24 - corps 25. A ce titre, à la figure 11, on remarque que les ajourages 26 comportent une section référencée e₇ et non plus e₅.

Avantageusement selon l'invention, il est possible de solidariser l'organe 27 de n'importe quel côté du corps 25 de la roue 3. De plus, aucun effort axial (par définition risquant d'être destructif) n'est appliqué sur le corps 25 de la roue 3 pendant le procédé. Seule une déformation élastique radiale est appliquée sur le corps 25. Il est également à noter que l'utilisation de la partie intermédiaire 24 dont la paroi externe est de forme sensiblement correspondante à l'ouverture 28 permet, lors de la déformation radiale B de la partie intermédiaire 24, d'exercer une contrainte uniforme sur une surface maximisée de la paroi du corps 25 autour de l'ouverture 28 afin d'éviter tout bris de la roue 3 en matériau fragile et s'adapter aux dispersions de fabrication des différents éléments.

Bien entendu, la présente invention ne se limite pas à l'exemple illustré mais est susceptible de diverses variantes et modifications qui apparaîtront à l'homme de l'art. En particulier, les ajourages de la pièce en matériau fragile peuvent comporter plus ou moins de série de trous que les modes de réalisation présentés ci-dessus. De plus, les modes de réalisation présentés sont susceptibles d'être combinés entre eux suivant les applications prévues.

A titre d'exemple, la figure 12 présente une alternative de réalisation du procédé expliqué ci-dessous. Ainsi, la figure 12 présente une alternative dans laquelle l'organe 27' est sensiblement différent de l'organe 27 en présentant une collerette 29'. A ce titre, l'outil 21' en partie inférieure n'a plus besoin de présenter un évidement 29 mais plus simplement un trou traversant de section au moins égale ou supérieure à celle de l'organe 27'. On comprend donc que la partie intermédiaire 24 et, éventuellement, le corps 25 pourront alors être portés par la collerette 29' et non plus par l'un des outils. De plus, la déformation de la partie intermédiaire 24 au niveau de sa partie inférieure n'est plus réalisée directement par l'outil 21' mais par l'intermédiaire de la collerette 29' sans que le procédé ne perde de son intérêt.

Les figures 1 et 2 présentent des applications pour un système d'échappement tel que l'ancre 1 et la roue d'échappement 3 ou un spiral 61 d'un mouvement horloger. Bien entendu, le présent assemblage 2, 12, 22, 62 peut être appliqué à d'autres éléments. On peut, de manière non exhaustive, envisager de former un balancier, un pont ou plus généralement un mobile à l'aide d'un assemblage 2, 12, 22, 62 comme expliqué ci-dessus.

Il est également possible de modifier la partie intermédiaire 24 afin de, lors de l'étape de déformation, faciliter l'orientation radiale B, C de la contrainte induite par la déformation de la partie intermédiaire. A titre d'exemple, il est ainsi envisageable de réaliser un évidement conique et coaxial par rapport à la lumière 23 afin de faciliter l'orientation radiale B, C mais également rendre la contrainte induite progressive.

Il est également possible d'utiliser l'assemblage 2, 12, 22, 62 en remplacement des moyens de déformation élastique 48 ou des cylindres 63, 66 du document WO 2009/115463 afin de fixer un résonateur du type balancier - spiral monobloc sur un axe de pivotement.

Bien entendu, deux pièces telles que décrites ci-dessus peuvent également être assujettis sur le même axe à l'aide de deux assemblages distincts 2, 12, 22, 62 afin de solidariser leur mouvement respectif.

Enfin, l'assemblage 2, 12, 22, 62 selon l'invention peut également permettre la solidarisation de tout type d'organe horloger ou non dont le corps est formé d'un matériau ne comportant pas de domaine plastique (silicium, quartz, etc.) avec un axe comme, par exemple, un résonateur du type diapason ou plus généralement un MEMS (acronyme provenant des termes anglais « Micro-Electro-Mechanical System »).

## Revendications

1. Procédé d'assemblage d'un organe (7, 17, 27, 67) en un premier matériau dans une pièce (1, 3, 61) en un deuxième matériau ne comportant pas de domaine plastique comportant les étapes suivantes :
a) former la pièce (1, 3, 61) avec une ouverture (8, 18, 28, 68) et des ajourages (6, 16, 26, 26', 26", 26"', 46, 46', 66) distribués autour de l'ouverture (8, 18, 28, 68) permettant de former des moyens de déformation élastique:
**caractérisé en ce qu'**il comporte outre:
b) introduire sans contrainte dans l'ouverture (8, 18, 28, 68) une partie intermédiaire (4, 14, 24, 64) en un troisième matériau comportant une lumière (23) ;
c) introduire sans contrainte dans la lumière (23) ledit organe ;
d) déformer élastiquement et plastiquement la partie intermédiaire (4, 14, 24, 64) par rapprochement axial de deux outils au-dessus et en dessous de ladite pièce intermédiaire (20, 21, 21') afin que ladite partie intermédiaire exerce une contrainte radiale (B, C) contre l'organe (7, 17, 27, 67) et contre la paroi de la pièce (1, 3, 61) entourant ladite ouverture (8, 18, 28, 68) en sollicitant lesdits moyens de déformation élastique de la pièce (1, 3, 61) et afin de solidariser l'assemblage (2, 12, 22, 62) de manière non destructive pour ladite pièce.

2. Procédé selon la revendication précédente, **caractérisé en ce que** la paroi externe de la partie intermédiaire (4, 14, 24, 64) est sensiblement de forme correspondante à l'ouverture (8, 18, 28, 68) de la pièce (1, 3, 61) afin d'exercer une contrainte radiale (B) sensiblement uniforme sur la paroi de la pièce (1, 3, 61) entourant l'ouverture (8, 18, 28, 68).

3. Procédé selon la revendication 1 ou 2, **caractérisé en ce que** l'ouverture (8, 18, 28, 68) de la pièce (1, 3, 61) est circulaire.

4. Procédé selon la revendication 1 ou 2, **caractérisé en ce que** l'ouverture (8, 18, 28, 68) de la pièce (1, 3, 61) est asymétrique afin d'éviter les déplacements relatifs entre les éléments dudit assemblage.

5. Procédé d'assemblage selon l'une des revendications précédentes, **caractérisé en ce que**, lors de l'étape b), la différence entre la section (e₄) de l'ouverture (8, 18, 28, 68) et la section externe (e₃) de la partie intermédiaire (4, 14, 24, 64) est d'environ 10 µm.

6. Procédé d'assemblage selon l'une des revendications précédentes, **caractérisé en ce que**, lors de l'étape c), la différence entre la section (e₆) de l'organe (7, 17, 27, 67) et la section intérieure (e₂) de la partie intermédiaire (4, 14, 24, 64) est d'environ 10 µm.

7. Procédé d'assemblage selon l'une des revendications précédentes, **caractérisé en ce que**, lors de l'étape d), la déformation exerce un serrage compris entre 16 et 40 µm.

8. Procédé d'assemblage selon l'une des revendications précédentes, **caractérisé en ce que**, lors des étapes b) à d), la partie intermédiaire (4, 14, 24, 64) est maintenue dans l'ouverture (8, 18, 28, 68) à l'aide d'un des deux outils.

9. Procédé d'assemblage selon l'une des revendications précédentes, **caractérisé en ce que** le deuxième matériau est formé à base de silicium.

10. Procédé d'assemblage selon l'une des revendications précédentes, **caractérisé en ce que** le troisième matériau est formé à base de métal ou d'alliage métallique.

11. Procédé d'assemblage selon l'une des revendications précédentes, **caractérisé en ce que** la pièce est un mobile (3) d'horlogerie.

12. Procédé d'assemblage selon l'une des revendications 1 à 10, **caractérisé en ce que** la pièce est une ancre (1) d'horlogerie.

13. Procédé d'assemblage selon l'une des revendications 1 à 10, **caractérisé en ce que** la pièce est un spiral (61) d'horlogerie.

14. Procédé d'assemblage selon l'une des revendications 1 à 10, **caractérisé en ce que** la pièce est un résonateur.

15. Procédé d'assemblage selon l'une des revendications 1 à 10, **caractérisé en ce que** la pièce est un MEMS.

## Patentansprüche

1. Verfahren zum Einbauen eines Organs (7, 17, 27, 67) aus einem ersten Material in ein Teil (1, 3, 61) aus einem zweiten Material, das keinen plastischen Bereich aufweist, das die folgenden Schritte umfasst:
a) Ausbilden des Teils (1, 3, 61) mit einer Öffnung (8, 18, 28, 68) und Aussparungen (6, 16, 26, 26', 26", 26"', 46, 46', 66), die um die Öffnung (8, 18, 28, 68) verteilt sind, was die Bildung elastischer Verformungsmittel ermöglicht;
**dadurch gekennzeichnet, dass** es außerdem umfasst:
b) Einführen eines Zwischenteils (4, 14, 24, 64) aus einem dritten Material, das ein Langloch (23) aufweist, ohne Zwang in die Öffnung (8, 18, 28, 68);
c) Einführen des Organs ohne Zwang in das Langloch (23);
d) elastisches und plastisches Verformen des Zwischenteils (4, 14, 24, 64) durch axiales Annähern von zwei Werkzeugen oberhalb und unterhalb des Zwischenteils (20, 21, 21'), damit das Zwischenteil eine radiale Beanspruchung (B, C) gegen das Organ (7, 17, 27, 67) und gegen die Wand des Teils (1, 3, 61), die die Öffnung (8, 18, 28, 68) umgibt, ausübt, indem die elastischen Verformungsmittel des Teils (1, 3, 61) eingeklemmt werden, und damit die Anordnung (2, 12, 22, 62) ohne Zerstörung des Teils befestigt wird.

2. Verfahren nach dem vorhergehenden Anspruch, **dadurch gekennzeichnet, dass** die Außenwand des Zwischenteils (4, 14, 24, 64) eine Form hat, die im Wesentlichen jener der Öffnung (8, 18, 28, 68) des Teils (1, 3, 61) entspricht, um eine im Wesentlichen gleichmäßige radiale Beanspruchung (B) auf die Wand des Teils (1, 3, 61), die die Öffnung (8, 18, 28, 68) umgibt, auszuüben.

3. Verfahren nach Anspruch 1 oder 2, **dadurch gekennzeichnet, dass** die Öffnung (8, 18, 28, 68) des Teils (1, 3, 61) kreisförmig ist.

4. Verfahren nach Anspruch 1 oder 2, **dadurch gekennzeichnet, dass** die Öffnung (8, 18, 28, 68) des Teils (1, 3, 61) asymmetrisch ist, um relative Verlagerungen zwischen den Elementen der Baugruppe zu vermeiden.

5. Einbauverfahren nach einem der vorhergehenden Ansprüche, **dadurch gekennzeichnet, dass** im Schritt b) der Unterschied zwischen dem Querschnitt (e₄) der Öffnung (8, 18, 28, 68) und dem äußeren Querschnitt (e₃) des Zwischenteils (4, 14, 24, 64) etwa 10 µm beträgt.

6. Einbauverfahren nach den vorhergehenden Ansprüchen, **dadurch gekennzeichnet, dass** im Schritt c) der Unterschied zwischen dem Querschnitt (e₆) des Organs (7, 17, 27, 67) und dem Innenquerschnitt (e₂) des Zwischenteils (4, 14, 24, 64) etwa 10 µm beträgt.

7. Einbauverfahren nach einem der vorhergehenden Ansprüche, **dadurch gekennzeichnet, dass** im Schritt d) die Verformung ein Zusammendrücken im Bereich von 16 bis 40 µm bewirkt.

8. Einbauverfahren nach einem der vorhergehenden Ansprüche, **dadurch gekennzeichnet, dass** in den Schritten b) bis d) das Zwischenteil (4, 14, 24, 64) in der Öffnung (8, 18, 28, 68) mit Hilfe eines der beiden Werkzeuge gehalten wird.

9. Einbauverfahren nach einem der vorhergehenden Ansprüche, **dadurch gekennzeichnet, dass** das zweite Material auf Siliciumbasis gebildet ist.

10. Einbauverfahren nach einem der vorhergehenden Ansprüche, **dadurch gekennzeichnet, dass** das dritte Material auf Metallbasis oder Metalllegierungsbasis gebildet ist.

11. Einbauverfahren nach einem der vorhergehenden Ansprüche, **dadurch gekennzeichnet, dass** das Teil ein bewegliches Uhrenelement (3) ist.

12. Einbauverfahren nach einem der Ansprüche 1 bis 10, **dadurch gekennzeichnet, dass** das Teil ein Uhrenanker (1) ist.

13. Einbauverfahren nach einem der Ansprüche 1 bis 10, **dadurch gekennzeichnet, dass** das Teil eine Uhrenspirale (61) ist.

14. Einbauverfahren nach einem der Ansprüche 1 bis 10, **dadurch gekennzeichnet, dass** das Teil ein Resonator ist.

15. Einbauverfahren nach einem der Ansprüche 1 bis 10, **dadurch gekennzeichnet, dass** das Teil eine MEMS ist.

## Claims

1. Method of assembling a member (7, 17, 27, 67) made of a first material in a part (1, 3, 61) made of a second material having no plastic domain, including the following steps:
a) forming the part (1, 3, 61) with an aperture (8, 18, 28, 68) and pierced holes (6, 16, 26, 26', 26", 26"', 46, 46', 66) distributed around the aperture (8, 18, 28, 68) intended to form elastic deformation means;
**characterised in that** the method further comprises steps:
b) inserting an intermediate part (4, 14, 24, 64), made of a third material and including a hole (23), into the aperture (8, 18, 28, 68) without any stress;
c) introducing said member into the hole (23) without any stress;
d) elastically and plastically deforming the intermediate part (4, 14, 24, 64) by moving two tools towards each other axially above and below said intermediate part (20, 21, 21') so that said intermediate part exert a radial stress (B, C) against the member (7, 17, 27, 67) and against the wall of the part (1, 3, 61) surrounding said aperture (8, 18, 28, 68) by stressing said elastic deformation means of the part (1, 3, 61) and in order to secure the assembly (2, 12, 22, 62) in a manner that is not destructive for said part.

2. Method according to the preceding claim, **characterized in that** the shape of the external wall of the intermediate part (4, 14, 24, 64) substantially matches the aperture (8, 18, 28, 68) of the part (1, 3, 61), so as to exert a substantially uniform radial stress (B) on the wall of the part (1, 3, 61) surrounding the aperture (8, 18, 28, 68).

3. Method according to claim 1 or 2, **characterized in that** the aperture (8, 18, 28, 68) of the part (1, 3, 61) is circular.

4. Method according to claim 1 or 2, **characterized in that** the aperture (8, 18, 28, 68) of the part (1, 3, 61) is asymmetrical to prevent any relative movement between the elements of said assembly.

5. Assembly method according to any of the preceding claims, **characterized in that**, in step b), the difference between the section (e₄) of the aperture (8, 18, 28, 68) and the external section (e₃) of the intermediate part (4, 14, 24, 64) is approximately 10 µm.

6. Assembly method according to any of the preceding claims, **characterized in that**, in step c), the difference between the section (e₆) of the member (7, 17, 27, 67) and the internal section (e₂) of the intermediate part (4, 14, 24, 64) is approximately 10 µm.

7. Assembly method according to any of the preceding claims, **characterized in that**, in step d), the deformation exerts a clamping force comprised between 16 and 40 µm.

8. Assembly method according to any of the preceding claims, **characterized in that**, in steps b) to d), the intermediate part (4, 14, 24, 64) is held in the aperture (8, 18, 28, 68) via one of the two tools.

9. Assembly method according to any of the preceding claims, **characterized in that** the second material is silicon-based.

10. Assembly method according to any of the preceding claims, **characterized in that** the third material is formed from a metal or metal alloy base.

11. Assembly method according to any of the preceding claims, **characterized in that** the part is a timepiece wheel set (3).

12. Assembly method according to any of claims 1 to 10, **characterized in that** the part is timepiece pallets (1).

13. Assembly method according to any of claims 1 to 10, **characterized in that** the part is a timepiece balance spring (61).

14. Assembly method according to any of claims 1 to 10, **characterized in that** the part is a resonator.

15. Assembly method according to any of claims 1 to 10, **characterized in that** the part is a MEMS.
